# EUROPEAN PATENT APPLICATION

(11) **EP 4 246 406 A1**
(43) Date of publication of application: **20.09.2023**
(21) Application number: 23159719.6
(22) Date of filing: 02.03.2023
(51) Int. Cl.: G06Q 30/014, G06Q 40/03

(54) **METHOD AND APPARATUS FOR FACILITATING MERCHANT CASH ADVANCES ON THE BASIS OF FORECASTED RETURN VOLUME**

(30) Priority: 17.03.2022 US 202217697868
(71) Applicant: Affirm, Inc., San Francisco, CA 94108 (US)
(72) Inventor: Alvarez, Pablo Lopez, 28043 Madrid (ES); Fort, Enric Gili, San Francisco, 94108 (US); Zaragoza, Mark L Sainz, North Tustin, 92705 (US); Liu, Oliver, San Francisco, 94109 (US); Vilar, Eduardo, San Rafael, 94903 (US)
(74) Representative: Piotrowicz, Pawel Jan Andrzej

(57) **Abstract**

A method of evaluating a merchant cash advance option may include receiving time series information including a plurality of signals representing transactions of merchants and customers where at least one of the signals relates to product returns. The method may further include aggregating the time series information, generating a plurality of trained models associated with the product returns, employing a selected model to forecast return volume and repurchase volume for a given merchant, determining a risk assessment value for the given merchant, and, if the risk assessment value is below a risk threshold, providing an offer of a merchant cash advance to the given merchant based on the forecast return volume and repurchase volume.

## Description

### TECHNICAL FIELD

Example embodiments generally relate to financial industry technologies and, in particular, relate to apparatuses, systems, and methods for facilitating commerce by enabling product return data to be analyzed for the provision of a cash advance to merchants on the basis of the same.

### BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. These transactions support individual sales, and help customers obtain products, and vendors sell products, while providing an ample source of data regarding the transactions involved.

That said, at least some of those transactions inevitably result in returned products. The return of products creates an interruption to cash flow for vendors since funds provided to cover a transaction may need to be refunded. If a refund is issued, the customer may not spend the refund at the same vendor, and therefore sales may be lost. Moreover, the return itself imposes a cost for processing on the vendor. As such, vendors often prefer to provide a voucher or credit to the customer, and certain companies have even evolved into a space where return processing is offered as a service to vendors.

The returns as a service space is relatively new, and continues to develop. Along with such development, there is fertile ground for innovative ideas regarding how to improve the efficiency and effectiveness of the service. Example embodiments explore technical means by which to improve efficiency and effectiveness in relation to some specific aspects of this space.

### BRIEF SUMMARY OF SOME EXAMPLES

Accordingly, some example embodiments may enable the provision of technical means by which to give vendors or merchants access to a cash advance on the basis of forecasted return volume. This can be a vital tool for businesses to maintain stock volume and manage inventory, and is also only possible with technical assistance that may then translate into financial assistance.

In an example embodiment, a method of evaluating a merchant cash advance option may be provided. The method may include receiving time series information including a plurality of signals representing transactions of merchants and customers where at least one of the signals relates to product returns. The method may further include aggregating the time series information, generating a plurality of trained models associated with the product returns, employing a selected model to forecast return volume and repurchase volume for a given merchant, determining a risk assessment value for the given merchant, and, if the risk assessment value is below a risk threshold, providing an offer of a merchant cash advance to the given merchant based on the forecast return volume and repurchase volume.

In another example embodiment, an apparatus for evaluating a merchant cash advance option may be provided. The apparatus may include processing circuitry configured for receiving time series information including a plurality of signals representing transactions of merchants and customers where at least one of the signals relates to product returns. The processing circuitry may be further configured for aggregating the time series information, generating a plurality of trained models associated with the product returns, employing a selected model to forecast return volume and repurchase volume for a given merchant, determining a risk assessment value for the given merchant, and, if the risk assessment value is below a risk threshold, providing an offer of a merchant cash advance to the given merchant based on the forecast return volume and repurchase volume.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a merchant cash advance platform according to an example embodiment;
FIG. 2 illustrates a functional block diagram of an apparatus for defining a facilitation agent according to an example embodiment;
FIG. 3 illustrates a block diagram showing control flow for determining whether to offer a merchant cash advance in accordance with an example embodiment;
FIG. 4 illustrates a block diagram for control flow associated with merchant interfaces with the platform in accordance with an example embodiment; and
FIG. 5 illustrates a block diagram of a method of evaluating whether to issue a merchant cash advance in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. In particular, the data platform may monitor various types of signals (i.e., data inputs) that are indicative of different activities, particularly associated with the return of merchandise by customers to the vendors or merchants from which the merchandise was originally purchased. On the basis of the various signals that are monitored, forecasting may be performed to anticipate future return volume for a given merchant. The given merchant may then be offered a cash advance based on the forecast along with other estimates regarding repurchasing volume and merchant risk. As such, the data processing platform may be embodied as a merchant cash advance platform (i.e., MCA platform) that connects customers and merchants (or vendors) to banks, payment services, and a transaction facilitator within the financial industry. By enabling data between the players on or members of the platform to be shared, and by further providing vendors with tools for using the platform to access a cash advance, the vendors may be enabled manage inventory and other costs upcoming via access to funds more proximate in time to the transactions that occur, even though some transactions may include returns. Thus, vendors may have increased flexibility for managing their funds in a way that prevents overextension, while still maximizing their access to the funds needed to provide customers continued access to goods and services they desire or need at any given time. Moreover, the platform may be employed under the management of the facilitator to control the usage of data on mutually agreeable terms for all participants who access the platform. Accordingly, a commercial framework can be provided by a technical platform designed to connect vendors with access to financial support to keep inventory levels and capacity to service customers at sustainable levels, and even further facilitate growth. In other words, instead of merely initiating a platform for supporting money transfers for individual transactions, example embodiments provide vendors with technical means by which to manage returns in a way that maximizes customer satisfaction, may improve repurchase volume, and also does not restrict the vendors' access to capital until the dust settles on past transactions involving returns. This stands in contrast to today's paradigm in which vendors may be required to take out loans from banks based on other factors, and may be saddled with high interest rates that may restrict their access to capital and continued ability to sustain and grow business. The creation of one platform, managed by the facilitator, for the interaction of multiple parties to enable vendors to access a cash advance based on return/repurchase volume forecasting provides a flexible and yet cohesive experience for vendors that maximizes responsible access to financial freedom and satisfaction.

Example embodiments therefore do not relate to the legal responsibilities associated with establishing a loan or a lending relationship. Moreover, example embodiments do not merely relate to the calculation of risk used to determine whether to grant a loan to a vendor. Instead, example embodiments relate to a technical means by which to determine (i.e., forecast) a volume of returns that can be expected for a given vendor, to further determine what volume of repurchasing can be expected based on that return volume (again for a given vendor), and then finally determine an amount of cash advance that can be provided to the given vendor based on that return and repurchase forecast. Example embodiments may, in some cases, further facilitate the transfer of funds to the vendor, and manage the return activity and repayment aspects that complete the full scope of the transactions involved.

Example embodiments not only provide the MCA platform, but also provide various enabling technologies that may facilitate operation of the MCA platform itself or of modules that may interact with the MCA platform. Example embodiments may also provide for enhancement of functionalities associated with the environment that is created by the MCA platform. The MCA platform may provide a mechanism by which to enhance commerce in a responsible way that is both empathetic and empowering to vendors.

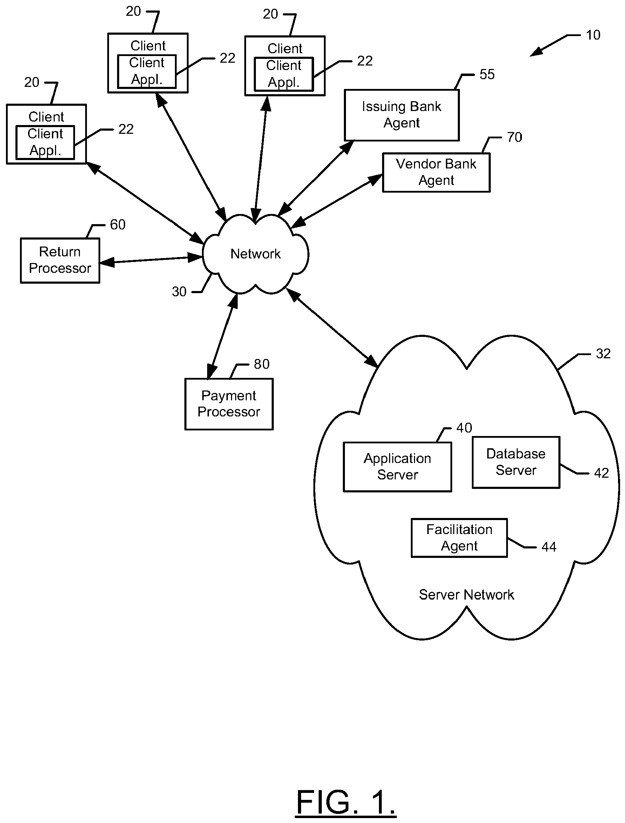

An example embodiment of the invention will now be described in reference to FIG. 1, which illustrates an example system in which an embodiment of the present invention may be employed. As shown in FIG. 1, a system comprising an MCA platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single individual or vendor. However, in some embodiments, one or more of the clients 20 may be associated with an organization (e.g., a company) or group of individuals (e.g., a business unit). In general, the clients 20 may be referred to as members of the environment or community associated with the MCA platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 40), and/or a database server 42, which together may form respective elements of a server network 32. Although the application server 40 and the database server 42 are each referred to as "servers," this does not necessarily imply that they are embodied on separate servers or devices. As such, for example, a single server or device may include both entities and the database server 42 could merely be represented by a database or group of databases physically located on the same server or device as the application server 40. The application server 40 and the database server 42 may each include hardware and/or software for configuring the application server 40 and the database server 42, respectively, to perform various functions. As such, for example, the application server 40 may include processing logic and memory enabling the application server 40 to access and/or execute stored computer readable instructions for performing various functions. In an example embodiment, one function that may be provided by the application server 40 may be the provision of access to information and/or services related to the MCA platform 10, and more particularly relating to coordinating provision of a cash advance to a vendor (i.e., associated with one of the clients 20) based on forecasted return volume as described herein. For example, the application server 40 may be configured to provide for storage of information descriptive of events or activities associated with the MCA platform 10 and the execution of a determination of a loan offer (and/or the extension of the loan itself and corresponding funds transfer) on behalf of a vendor, while freeing the vendor from all risk (and in some cases also processing responsibility) associated with the return activity itself. In some cases, data and/or services may be exchanged amongst members, where specific needs or desires of the members are aligned with respect to playing their respective roles in connection with conducting financial transactions, and enabling the volume of returns associated with such transactions to serve as a basis for access to funds by the vendor in the form of a merchant cash advance.

In some embodiments, for example, the application server 40 may therefore include an instance of a facilitation agent 44 comprising stored instructions for handling activities associated with practicing example embodiments as described herein. The facilitation agent 44 may be a technical device, component or module affiliated with the facilitator of the functioning of the MCA platform 10. Thus, the facilitation agent 44 may operate under control of the facilitator to be a technical means by which to carry out activities under direction of the facilitator or employees thereof. As such, in some embodiments, the clients 20 may access the MCA platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 40 (e.g., via download over the network 30) to one or more of the clients 20 to enable recipient clients to instantiate an instance of the client application 22 for local operation such that the facilitation agent 44 may be a distributor of software enabling members or parties to participate in operation of the MCA platform 10. Alternatively, another distributor of the software may provide the client 20 with the client application 22, and the facilitation agent 44 may communicate with the client 20 (via the client application 22) after such download.

In an example embodiment, the client application 22 may therefore include application programming interfaces (APIs) and other web interfaces to enable the client 20 to conduct business via the MCA platform 10. The client application 22 may include a series of control consoles or web pages including a landing page, onboarding services, activity feed, account settings (e.g., vendor profile information), transaction management services, payment management services and the like in cooperation with a service application that may be executed at the facilitation agent 44. Thus, for example, the client application 22 may enable the vendor to submit profile information, request a cast advance, review monthly statements, access or adjust information associated with the vendor account, or receive help or other information. Budgeting tools and other useful information and other useful tools for managing the finances of the vendor may also be available via the client application 22 in some cases.

In an example embodiment, the application server 40 may include or have access to memory (e.g., internal memory or the database server 42) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 40 to communicate with the network 30 and/or the clients 20 for the provision and/or receipt of information associated with performing activities as described herein. Moreover, in some embodiments, the application server 40 may include or otherwise be in communication with an access terminal (e.g., a computer including a user interface) via which individual operators or managers of the entity associated with the facilitation agent may interact with, configure or otherwise maintain the MCA platform 10 and/or the facilitation agent 44.

As such, the environment of FIG. 1 illustrates an example in which provision of content and information associated with the financial industry (e.g., including at least some data provided to/from customers and/or vendors in real-time) may be accomplished by a particular entity (namely the facilitation agent 44 residing at the application server 40). Thus, the facilitation agent 44 may be configured to handle provision of content and information associated with tasks that are associated only with the MCA platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

In some cases, the facilitation agent 44 may be utilized to issue a merchant cash advance in the form of a virtual card, which may provide instant credit to qualifying merchants. However, other embodiments may not include such a virtual card, but other modes of transferring money or credit to the qualifying merchants. The MCA platform 10 may therefore include or communicate with other actors, entities or organizations to support various ways of transferring money or credit, and FIG. 1 reflects some of those actors, entities or organizations. In this regard, the MCA platform 10 may also operate in cooperation with a bank authentication agent 50, an issuing bank agent 55, a return processor 60, a vendor bank agent 70, and a payment processor 80. The facilitation agent 44 may be configured to interact with, or otherwise facilitate interactions between, each of the bank authentication agent 50, the issuing bank agent 55, the return processor 60, the vendor bank agent 70, and the payment processor 80 in order to carry out example embodiments as described herein. Thus, each of the bank authentication agent 50, the issuing bank agent 55, the return processor 60, the vendor bank agent 70, and the payment processor 80 should be understood to be a computer, server, smart phone, or other technical component or module associated with a respective party (e.g., an authenticating bank, issuing bank, a vendor return processor, a customer bank, and a payment service, respectively) that is capable of communication with other parties via the network 30, and under control of or responsive to facilitating communication by the facilitation agent 44.

The issuing bank may be a bank or other financial services provider. The issuing bank may have a persistent relationship with the entity associated with the facilitation agent 44 (e.g., the facilitator), but generally need not have any persistent or pre-existing relationship with the vendor or the vendor bank. The issuing bank may be contracted with or otherwise have a pre-existing relationship with the facilitation agent 44 (and entity associated therewith) that enables the facilitation agent 44 to facilitate transactions on behalf of the vendor when certain conditions (agreed upon in advance by the entity associated with the facilitation agent 44 and the issuing bank) are met associated with a transaction undertaken (or attempted) by the vendor via the client 20 and client application 22. For example, the issuing bank may be the issuer of a loan or credit extension on behalf of the facilitation agent 44 and be responsible for directly paying the merchants and vendors the amount of money that is approved by the facilitation agent 44 for a cash advance to the vendor (associated with one of the clients 20).

The bank authenticator may be an agent or financial service provider capable of granting the facilitation agent 44 access to the vendor bank to view account balances and credentials. The balances and credentials may be used or relied upon to pull or push funds from or to the vendor bank using the payment processor 80. Thus, for example, the bank authenticator may utilize its own software, application programming interfaces (APIs) or the like that define an infrastructure or intermediary platform to connect a vendor's bank account with the facilitation agent 44.

The vendor bank may be a bank at which the vendor (i.e., associated with one of the clients 20) deposits money in a bank account such as a savings account or a checking account. In an example embodiment, the vendor may subscribe or register to a service or request a cash advance from the facilitation agent 44 to enroll the vendor as a member of the MCA platform 10. During subscription or registration, the vendor may be prompted (via the client 20 and client application 22) by the facilitation agent 44 to provide account details identifying the savings account or checking account (i.e., a vendor account) at the vendor bank. The vendor may, by registering or subscribing, further authorize the facilitation agent 44 to conduct specific activities related to the vendor account when corresponding conditions are met, which may be facilitated by one of or a combination of the bank authenticator and the issuing bank as described above. The activities may include checking account status (i.e., checking a current balance of funds deposited in the vendor account) and/or authorizing withdrawal of funds from the vendor account by the payment processor 80 in order to make payments to the facilitation agent 44 (e.g., when repurchases are made).

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online.

The vendor bank agent 70 may change for each respective one of the clients 20 (and therefore for each respective vendor). Similarly, the vendor bank agent 70 may change for each respective transaction since different vendors may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all vendors' banks can be accommodated. For example, if the vendor bank was not serviced by a first bank authentication agent, the facilitation agent 44 is configured to swap in a second bank authentication agent that would allow for servicing of the vendor bank. Accordingly, the facilitation agent 44 is configured to swap each of the payment processors 80 and the bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the MCA platform 10 may operate to enable the vendor associated with a given one of the clients 20 to receive a merchant cash advance from the facilitation agent 44 based on forecasting associated with returns. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the MCA platform 10. The facilitation agent 44 may prompt the client 20 to provide account details associated with the vendor bank agent 70 and may provide terms and conditions (electronically or via mail or other communication means) that the vendor may accept to establish a vendor profile and vendor account with the facilitation agent 44. Thus, it should be appreciated that the client application 22 could be used to set up the vendor account and vendor profile and/or to conduct individual transactions (i.e., individual requests for a merchant cash advance, or individual acceptance of a merchant cash advance offer initiated by the facilitation agent 44).

During establishment of the vendor account, the vendor may provide an identification of the vendor bank associated with the customer bank agent 70, and may also provide details for the savings or checking account that the vendor maintains at the vendor bank. The vendor may also authorize the facilitation agent 44 to make real time (or anytime) checks on account status (e.g., account balance) or to make periodic routine checks of the same. Thus, for example, for each transaction, the facilitation agent 44 may be enabled to check the account balance of the vendor. Alternatively or additionally, the facilitation agent 44 may make routine checks or snapshot looks at the account balance. For example, a check may be made every day at a certain time, every two or three days, or at other standard or random intervals. The account status of the vendor bank may be used by the facilitation agent 44 in facilitating payment transactions, as described in greater detail below.

The issuing bank may have an agreement or relationship with the entity associated with the facilitation agent 44 that enables the facilitation agent 44 to engage the issuing bank to extend funds to a merchant or vendor in response to instruction from the facilitation agent. The facilitation agent 44 may therefore coordinate communications and funds transferring between members or parties of the MCA platform 10 to facilitate payment transactions that can be settled later or in ways selected specifically by the vendor. The communication and activities that are involved or ensue thereafter will be described in greater detail below.

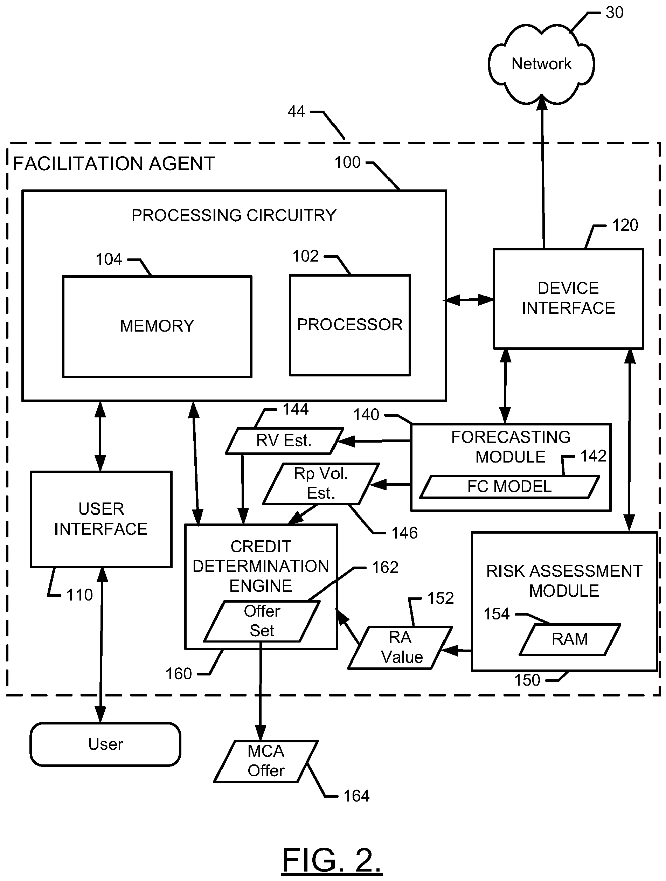

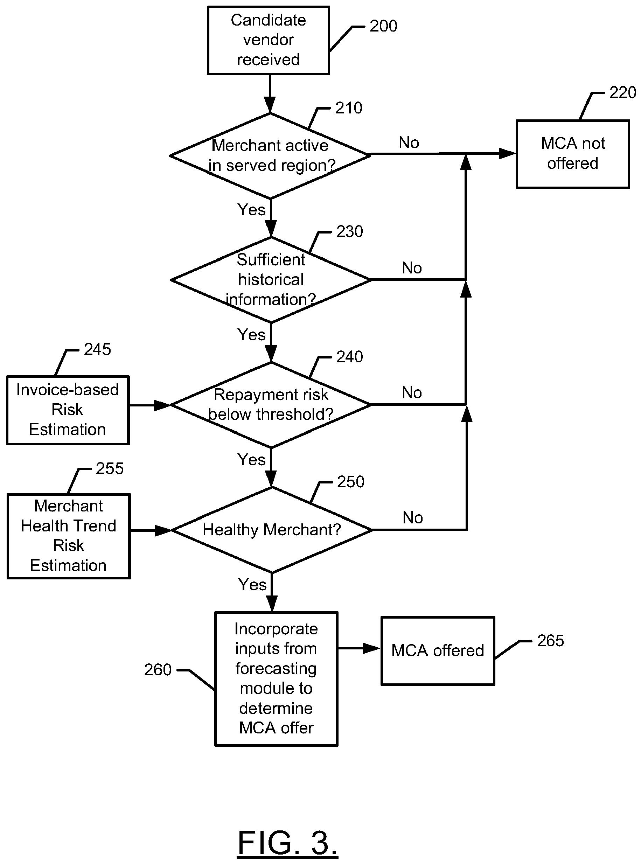

Regardless of how the transactions are initiated, the MCA platform 10 of FIG. 1 may be used before, during and after the time of the transaction in order to enable the facilitation agent 44 to set up the vendor account, make determinations necessary to initiate the transactions (i.e., cash advances) responsive to requests for the same, or at periodic intervals, and coordinate settlement of funds associated with the return and repurchase activities that form the basis of transactions at the appropriate time. Each of these activities may have its own respective timing and communications that are facilitated by the facilitation agent 44 and FIGS. 3-5 illustrate example control flows associated with each respective scenario. However, prior to examining each respective scenario, the structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 40 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 40) or by devices in a client/server relationship (e.g., the application server 40 and one or more clients 20). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the MCA platform hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more nontransitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 42) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

The facilitation agent 44 may be configured to include tools to facilitate the creation of vendor accounts (and a corresponding vendor profile), and the coordination of communication and fund transfers to support the operations of the MCA platform 10 as described herein. The tools may be provided in the form of various modules that may be instantiated by configuration of the processing circuitry 100. FIG. 2 illustrates some examples of modules that may be included in the facilitation agent 44 and that may be individually configured to perform one or more of the individual tasks or functions generally attributable to the facilitation agent 44 according to an example embodiment. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein.

As shown in FIG. 2, the facilitation agent 44 may include a forecasting module 140, a risk assessment module 150 and a credit determination engine 160. The forecasting module 140 may be configured to forecast return volume for a given merchant and repurchase volume for the given merchant as described in greater detail below. In this regard, for example, the forecasting module 140 may be configured to receive time series data associated with specific signals that may be useful for forecasting as described herein. In an example embodiment, the time series data may be associated with customer/vendor purchase transactions, and may be aggregated with different desired frequencies for corresponding different entities, over different signal types. In some example embodiments, the signal types may include signals descriptive of transaction details including order count (e.g., for a particular merchant or piece of merchandise), order dollar value, return count, repurchase count, etc. The sampling frequency may be daily, weekly, monthly, quarterly, or any other useful frequency. Entities may include a conglomerate or company, a segment (e.g., a group of merchants selling similar merchandise), a merchant, etc.

The forecasting module 140 may receive (e.g., via the network 30) any or all of the time series data noted above, and may analyze various signals as a function of time. In an example embodiment, the forecasting module 140 may employ a forecasting model 142 (labeled as FC model in FIG. 2 due to space limitations) that is used to conduct the forecasting. The forecasting model 142 may be a model that has been crafted previously and is used to guide the processing of the inputs received in the forecasting module 140 to generate a corresponding forecasting output. However, in some cases, the forecasting module 140 may actually actively train, update or design the forecasting model 142 either periodically or in real time, based on analysis of the time series data relative to the continued performance of the forecasting module 140 and feedback received from operators or designers of the forecasting module 140. In this regard, in some cases, the forecasting module 140 may be configured to receive historical time series data and run a number of different models on the historical time series data. A best model may be selected based on the outputs received, and the best model may become the forecasting model 142 that is used for performing future forecasting. Historical data may continue to be analyzed against modifications or changes that are aimed at tuning the forecasting model 142, and the forecasting model 142 may be updated accordingly as time goes on based on assessments of the potential results that may be achieved by updating via consideration of the tuning options that are evaluated.

Regardless of whether the forecasting model 142 is updated or updateable over time, the forecasting model 142 currently in use will dictate how the time series data is processed by the forecasting module 140 to forecast future values for the parameters being studied or otherwise involved in the time series data. In other words, the forecasting model 142 will be used by the forecasting module 140 to determine the corresponding outputs for the current time series data inputs. In an example embodiment, the outputs may include a return volume estimate 144 and a repurchase volume estimate 146.

In an example embodiment, the forecasting module 140 may utilize input parameters defining merchant attributes (which may be determined from merchant profile information) along with the transaction details (e.g., order count, order dollar value, return count, repurchase count, etc.) at the corresponding sampling frequency defined by the forecasting model 142 in use for the entities desired. The return volume estimate 144 (labeled as RV Est. in FIG. 2 due to space limitations) may define the expected volume (by item count, return count or by dollar value) of returns that the merchant will have over the sampling frequency period (e.g., monthly or quarterly). The repurchase volume estimate 146 (labeled as Rp Vol. Est. in FIG. 2 due to space limitations) may define the expected volume (by item count or by dollar value) of repurchases that the merchant will have relative to the returns over the same sampling frequency period (e.g., monthly or quarterly). As a result, an aggregate amount or value of returns that the merchant should see over a given period may be known. In some cases, not only is the expected value known, but a full range of likely values (e.g., a distribution of expected returns) along with a probability associated with each portion of the range may be known. Additionally or alternatively, the aggregate amount or value of repurchases that are experienced by the merchant or that are expected to flow from those returns over a given period may be known with or without a corresponding full range of likely values (e.g., a distribution of expected returns) along with a probability associated with each portion of the range. As noted below, this information (e.g., the return volume estimate 144 and the repurchase volume estimate 146 will be used by the credit determination engine 160 (along with a risk assessment value 152 received from the risk assessment module 150) as described below.

In some embodiments, the forecasting model 142 may be specific to an individual business segment, product line, region or season. Thus, for example, seasonal changes in return behaviors may be accounted for by switching to seasonally adjusted (and season specific) models. This may ensure that models are as accurate as possible through all times of the year, and through all normal cycles that can be identified as having similar characteristics relating to return behaviors. The forecasting model 142 of some embodiments may employ Bayesian Ridge regression to explain the time series data as a function of time derived features, and may include modeling aimed at seasonality, and monitoring and adjusting for any trends that may be evident. Indirect forecasting may therefore be performed using univariate Bayesian time series model estimation. Indirect forecasting may be an additional step in some cases. Indirect forecasting may enable estimation of quantities like repurchases for which limited or no historical data is available. Indirect forecasting may also or alternatively enable estimation of a related quantity (e.g. return volume) using the univariate model, and transform the estimation to repurchase volume via a conversion or transformation rate that is a multiplier estimated, potentially from network data (using also other merchant's data). In some cases, the models may define a transfer function (or transmission matrix) for correcting faulty historical order data based on the historical input data. Testing of models for accuracy may be continued as data sets build, and may be tailored to segments, seasons, etc., where the accuracy is expected to hold for a given model.

The risk assessment module 150 may be configured to utilize profile information about the given merchant in order to calculate the risk assessment value 152 (labeled as RA Value in FIG. 2 due to space limitations) associated with the given merchant. In an example embodiment, the risk assessment module 150 may employ a risk assessment model 154 (labeled as RAM in FIG. 2 due to space limitations) in order to generate the risk assessment value 152. The risk assessment model 154 may include rules for determining risk based on multiple factors associated with each individual merchant. In an example embodiment, the factors may include an invoice-based risk estimation and/or a merchant health trend risk estimation.

The invoice-based risk estimation may account for the repayment performance of the merchant. For example, the invoice-based risk estimation may account for the frequency and recency of payments made by the merchant. The number of days since the merchant became a community member may also factor into the invoice-based risk estimation. In short, if the merchant has been a long time community member, or if the merchant has been active in processing and making payments as a member of the community (i.e., the community of members of the MCA platform 10), particularly if such activity is recent, then the risk associated with lending money to the merchant may be smaller.

The merchant health trend risk estimation may take a slightly different view of the risk calculus for a merchant. In this regard, the merchant health trend risk estimation may monitor the number of external orders the merchant is receiving, and trends in the same. If the merchant does or does not process many orders, or if a significant change in orders has been noted recently, a negative change, or small numbers of orders generally may indicate less capacity to repay an advance, and therefore a larger risk. Thus, order information including volume, trends, and new customer orders are all relevant to determining the merchant health trend risk estimation. Other factors that may impact the merchant health trend risk estimation may include changes in employee count, changes in internet or website traffic, changes in social media followers, changes in monthly spend on services that may relate to ecommerce (e.g., marketing spend, etc.). All of these factors may be trend analyzed and used to generate the merchant health trend risk estimation. In an example embodiment, the risk assessment value 152 may be determined based on either or a combination of both the merchant health trend risk estimation and the invoice-based risk estimation. As noted above, the risk assessment value 152 may be used to determine whether and how much to offer to the given merchant as a merchant cash advance by the credit determination engine 160.

In an example embodiment, the credit determination engine 160 may be configured to receive what offer, if any, can be made to a merchant based on the inputs to the credit determination engine 160. In this regard, the inputs may include the return volume estimate 144, the repurchase volume estimate 146, and the risk assessment value 152 to make such determinations. In some cases, the credit determination engine 160 may include an offer set 162 defining a set of options for offers for merchant cash advances that can be provided based on different ranges of inputs for which the merchant qualifies for an offer. In this regard, the inputs may be seen as qualification criteria, and different qualification criteria may qualify the merchant to receive a corresponding different level or product as an offer. In some cases, the qualification criteria may be used to determine pricing and conditions for making an offer. In an example embodiment, a requesting merchant, or a list of eligible or candidate merchants may be forwarded to the credit determination 160 (or more particularly to the facilitation agent 44) for consideration as to whether any such candidates qualify to receive an offer. Candidate merchants (or the requesting merchant) may be processed to receive the return volume estimate 144, the repurchase volume estimate 146, and the risk assessment value 152, as noted above. Based on the qualification criteria, the credit determination engine 160 may determine whether any of the candidate merchants qualify for any of the offers in the offer set 162. Each candidate that qualifies may then receive a corresponding merchant cash advance offer 164 from the facilitation agent 44.

The merchant cash advance offer 164 may include an amount of money that can be borrowed by the candidate merchant receiving the offer (i.e., an approved merchant) in the form of a merchant cash advance, along with the corresponding repayment amount that will be repaid to the facilitator from the repurchases that are executed from future returns. In this way, forecasting and risk are determined to enable the facilitator to determine an amount of money that is safe to advance to the merchant based on best estimates of the future repurchase volume and value. The facilitator is repaid based on repurchases made after returns to the merchant, and the facilitator effectively transfers the risk of receiving the repurchases from the returns to itself from the merchant by advancing cash to the merchant on the basis of the return and repurchase volume.

After the merchant cash advance offer 164 is received, the merchant may utilize the system of FIG. 1 to accept the offer and have funds transferred to the vendor bank via the vendor bank agent 70. In an example embodiment, a physical or virtual card may be credited with the corresponding amount of the merchant cash advance. Thus, for example, the merchant may receive details (e.g., account number and other details) electronically for a virtual card that may be immediately active and usable by the merchant in the amount of the merchant cash advance. This may avoid any need to employ the vendor bank of FIG. 1. However, the vendor bank may still be used as an alternative, or to make payments when repurchases are received.

Thus, in most example embodiments, the merchant may receive a lump sum of money that is indicative of a cash advance to cover a predetermined period of time for all repurchases that occur within that time based on the forecasting described above. In this regard, for example, the forecasting module 140 may define a period of time over which the forecasts are performed, and the credit determination engine 160 may define the merchant cash advance offer 164 to cover the period of time as a lump sum cash advance value that considers the aggregate amount of repurchase volume that are forecast in light of the risk determined. However, in some embodiments, the transfer of funds may happen in more discrete intervals. For example, when a merchant or vendor is a member of the MCA platform 10 and is approved for a given amount of merchant cash advance as defined by the merchant cash advance offer 164, each individual return may initiate actions as defined below.

In this regard, for example, a customer may initiate a return either at the merchant or at a service provider that handles return processing for the merchant. In either case, the processing of the return may be considered to be performed by the return processor 60. The return processor 60 may provide signal information to the facilitation agent 44 for the merchant (and numerous other merchants, potentially across many industries and segments). Based on the information (e.g., time series data) from the return processor 60, the facilitation agent 44 may perform the analyses described herein to decide whether to communicate an offer for a cash advance to one of the clients 20.

When the return is initiated, the return processor 60 may issue a voucher for the value of the return to the customer. Notably, this voucher may be issued when the return is initiated, and prior to receipt of the actual returned merchandise. The facilitator will have, as noted above, already have provided the advance of funds which cover the voucher. The facilitator may issue an invoice or notification of any service fee that is applied when a repurchase is processed to the merchant at the time the repurchase is made. Thereafter, the settlement of the transaction includes the merchant providing the facilitator with a payment of the repurchase amount (e.g., via a payment processor). Settlement activities may happen automatically until the amount of the merchant cash advance offer 164 is reached, at which time the merchant may need to request a new offer to continue with the paradigm discussed above. However, in many cases, aggregating and issuing a cash advance that provides a measurable amount of capital infusion to the merchant is the normal way of employing example embodiments. In such cases, the issuing bank 55 may advance funds to the vendor bank agent 70 to put the amount of the cash advance associated with the merchant cash advance offer 164 in the bank account of the vendor at the vendor bank. Alternatively, as noted above, the virtual card issued may be credited with the amount of the merchant cash advance offer 164, or a new virtual card may be issued each time a new offer is accepted. In some embodiments, any fees for vouchers used in repurchases may be invoiced to the merchant (e.g., via a payment processor) when the repurchase is made, and the payment processor may invoice the merchant for settlement when the product is returned.

FIG. 3 illustrates a block diagram of a communication paradigm that is achievable using an example embodiment. Referring to FIG. 3, information identifying a candidate vendor is received at operation 200. The information may be received pursuant to a request from the candidate vendor, or from a list of possible candidates (e.g., a list of possible leads). Thereafter, at operation 210, a determination is made as to whether the candidate merchant is active and/or operating in a served region (e.g., in the United States). Activity may be determined based on an examination of whether the candidate merchant is receiving and filling on-line orders in the served region. If the merchant is not active, or not active in the served region, no merchant cash advance may be offered at operation 220. If the candidate merchant is active and is active in a served region, then a determination may be made at operation 230 as to whether sufficient historical information is available for the candidate merchant to make a risk assessment. If there is insufficient historical data to make the risk assessment, then flow may proceed to operation 220. If, however, there is sufficient historical data to make the risk assessment, then flow may proceed to operation 240.

At operation 240, the invoice-based risk estimation 245 may be fed in as an input, and a determination may be made as to whether repayment risk is below a threshold amount (e.g., 5%). If the repayment risk out of operation 240 is above the threshold (e.g., not below the 5% threshold), then flow may proceed to operation 220. However, if the repayment risk is below the threshold amount, then flow may proceed to operation 250.

At operation 250, the merchant health trend risk estimation 255 may be fed in as an input, and a determination may be made as to whether the merchant has healthy growth, performance indicators, or otherwise positive business health indications. If not, flow may proceed to operation 220. However, if the candidate merchant has positive business health indications, then the candidate merchant may be offered merchant cash advance (e.g., provided with the merchant cash advance offer 164 of FIG. 2) at operation 265 based on the further inputs provided by the forecasting module at operation 260.

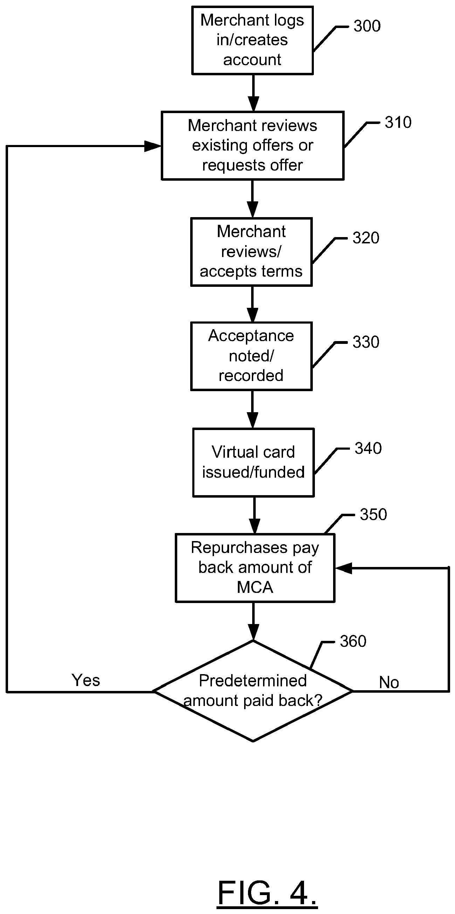

The operations of FIG. 3 may be performed at least in part via the operation of the facilitation agent 44 of FIGS. 1 and 2. In some embodiments, the facilitation agent 44 may further be responsible for defining or providing instructions (e.g., via the client application 22) for generation of various interfaces or interface elements at the client 20 to facilitate interaction between the merchant and the facilitator in connection with evaluating the merchant's qualifications for a merchant cash advance, and further for securing the transfer of funds associated with the same. FIG. 4 illustrates more detailed block diagram illustrating various operations associated with the interfaces the merchant may utilize to communicate with the facilitator to perform the operations otherwise described in general terms above.

Referring now to FIG. 4, a merchant may initially log into an existing account, or may create a merchant account at operation 300. The merchant account may include merchant profile information describing the business segment, goods/services sold, regions served, sales volume, return volume, seasonal breakdown information, or other useful information that may assist in enabling the facilitation agent 44 in properly identifying the best models to apply for determining the qualifications of the merchant relative to obtaining a merchant cash advance. In some cases, the merchant profile information may further include information identifying the vendor bank to facilitate funds transfers thereto or therefrom in association with the activities described above.

After logging in or creating an account, the merchant may review an existing offer or generate a request for an offer at operation 310. At operation 320, the merchant may review terms of service and receive an electronic signature request to signify acceptance of the terms. Acceptance of the offer may then be noted, and notifications/records of the accepted agreement terms may be distributed at operation 330. At operation 340, the merchant may receive a virtual card credited with the amount of the offer for which the merchant qualified (e.g., via email). The merchant can, at this point, immediately use the virtual card to make purchases to support the merchant's business. Thereafter, at operation 350, when repurchases are made (e.g., via instant credit or exchange), the credit spent is used by the merchant to pay back the amount of the merchant cash advance. In an example embodiment, when a predetermined amount of the merchant cash advance has been paid back (e.g., 75%) at operation 360, the merchant may receive a new offer (or set of offers) to return flow to operation

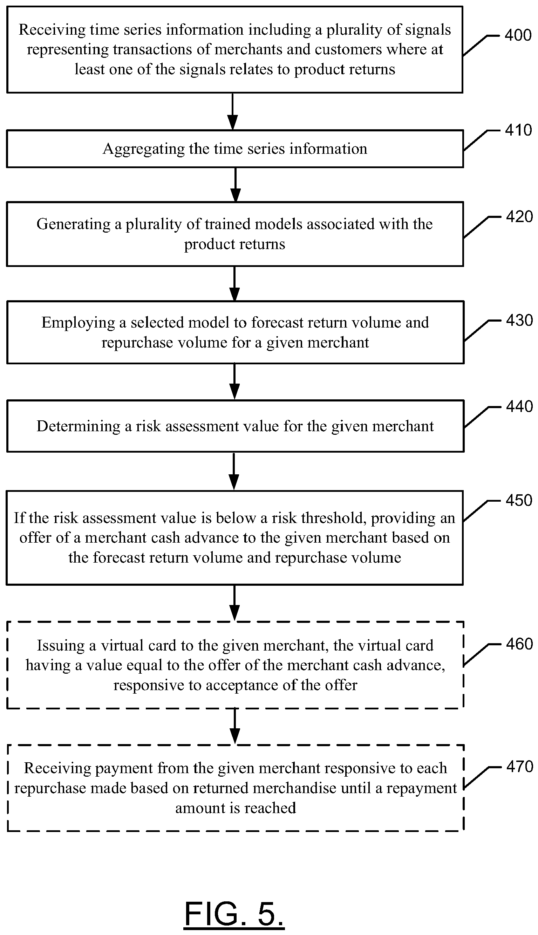

From a technical perspective, the MCA platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 5 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of evaluating whether to issue a merchant cash advance according to one embodiment of the invention is shown in FIG. 5. The method may include receiving time series information including a plurality of signals representing transactions of merchants and customers where at least one of the signals relates to product returns at operation 400. The method may further include aggregating the time series information at operation 410, generating a plurality of trained models associated with the product returns at operation 420, employing a selected model to forecast return volume and repurchase volume for a given merchant at operation 430, determining a risk assessment value for the given merchant at operation 440, and, if the risk assessment value is below a risk threshold, providing an offer of a merchant cash advance to the given merchant based on the forecast return volume and repurchase volume at operation 450. In an example embodiment, the method may further include other (optional) operations, some examples of which are shown in dashed lines in FIG. 5. In this regard, the method may further include, responsive to acceptance of the offer of the merchant cash advance to the given merchant, issuing a virtual card to the given merchant, the virtual card having value equal to the offer of the merchant cash advance at operation 460, and receiving payment from the given merchant responsive to each repurchase made based on returned merchandise until a repayment amount is reached at operation 470.

In an example embodiment, an apparatus for performing the method of FIG. 5 above may comprise a processor (e.g., the processor 102) or processing circuitry configured to perform some or each of the operations (400-470) described above. The processor may, for example, be configured to perform the operations (400-470) by performing hardware implemented logical functions, executing stored instructions, or executing algorithms for performing each of the operations. In some embodiments, the processor or processing circuitry may be further configured for additional operations or optional modifications to operations 400 to 470.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, aggregating the time series information may include aggregating the time series information at a selected frequency for a selected entity. In an example embodiment, the selected frequency may be monthly, weekly, daily or quarterly, and the selected entity may be a company, business segment, or the given merchant. In some cases, the signals may include order count, product return count, product return value and repurchase value. In an example embodiment, employing the selected model may include selecting the selected model from among the plurality of trained models based on merchant profile information. In some cases, the selected model may be a model selected based on region of operation and seasonal return pattern changes. In an example embodiment, determining the risk assessment value for the given merchant may include determining an invoice-based risk estimation that related to repayment performance of the given merchant and/or determining a merchant health trend risk estimation that monitors trends in order volume, website traffic, social media activity, or monthly spend on marketing.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of evaluating a merchant cash advance option, the method comprising:
receiving time series information comprising a plurality of signals representing transactions of merchants and customers, at least one of the signals relating to product returns;
aggregating the time series information;
generating a plurality of trained models associated with the product returns;
employing a selected model to forecast return volume and repurchase volume for a given merchant;
determining a risk assessment value for the given merchant; and
if the risk assessment value is below a risk threshold, providing an offer of a merchant cash advance to the given merchant based on the forecast return volume and repurchase volume.

2. The method of claim 1, wherein aggregating the time series information comprises aggregating the time series information at a selected frequency for a selected entity.

3. The method of claim 2, wherein the selected frequency is monthly, weekly, daily or quarterly, and the selected entity is a company, business segment, or the given merchant.

4. The method of claim 3, wherein the signals include order count, product return count, product return value and repurchase value.

5. The method of claim 1, wherein employing the selected model comprises selecting the selected model from among the plurality of trained models based on merchant profile information.

6. The method of claim 5, wherein the selected model is a model selected based on region of operation and seasonal return pattern changes.

7. The method of claim 1, wherein determining the risk assessment value for the given merchant comprises determining an invoice-based risk estimation that related to repayment performance of the given merchant.

8. The method of claim 1, wherein determining the risk assessment value for the given merchant comprises a merchant health trend risk estimation that monitors trends in order volume, website traffic, social media activity, or monthly spend on marketing.

9. The method of claim 1, wherein determining the risk assessment value for the given merchant comprises:
determining an invoice-based risk estimation that related to repayment performance of the given merchant; and
determining the risk assessment value for the given merchant comprises a merchant health trend risk estimation that monitors trends in order volume, website traffic, social media activity, or monthly spend on marketing.

10. The method of claim 1, further comprising, responsive to acceptance of the offer of the merchant cash advance to the given merchant, issuing a virtual card to the given merchant, the virtual card having value equal to the offer of the merchant cash advance, and receiving payment from the given merchant responsive to each repurchase made based on returned merchandise until a repayment amount is reached.

11. An apparatus for facilitating evaluation of a merchant cash advance option, the apparatus comprising processing circuitry configured to perform the method of claims 1-10.
